# EUROPÄISCHE PATENTSCHRIFT

(11) **EP 1 523 693 B1**
(45) Veröffentlichungstag und Bekanntmachung des Hinweises auf die Patenterteilung: **01.08.2007**
(21) Anmeldenummer: 03764919.1
(22) Anmeldetag: 13.06.2003
(51) Int. Cl.: G02B 27/12, G02B 26/08, G02B 21/00

(54) **OPTISCHE VORRICHTUNG ZUM VEREINIGEN VON LICHTSTRAHLEN**
OPTICAL DEVICE FOR THE COMBINATION OF LIGHT BEAMS
DISPOSITIF OPTIQUE PERMETTANT DE COMBINER DES FAISCEAUX LUMINEUX

(30) Priorität: 19.07.2002 DE 10233074
(43) Veröffentlichungstag der Anmeldung: 20.04.2005
(73) Patentinhaber: Leica Microsystems CMS GmbH, 35578 Wetzlar (DE)
(72) Erfinder: ENGELHARDT, Johann, 76669 Bad Schönborn (DE)
(74) Vertreter: Reichert, Werner Franz
(86) Internationale Anmeldenummer: PCT/EP2003/006236
(87) Internationale Veröffentlichungsnummer: WO 2004/010202

(56) Entgegenhaltungen:
- EP-A- 1 202 102
- DE-A- 19 829 953
- DE-C- 19 816 302
- US-A- 3 743 383

## Beschreibung

Die Erfindung betrifft eine optische Vorrichtung zum Justieren von mindestens einem Lichtstrahl.

Außerdem betrifft die Erfindung ein Verfahren zum Justieren mindestens eines Lichtstrahles auf einen Sollstrahlengang und ein Verfahren zum Vereinigen von einem Lichtstrahl und zumindest einem weiteren Lichtstrahl.

In der Optik tritt häufig das Problem auf, Lichtstrahlen, insbesondere unterschiedlicher Wellenlänge, kollinear zu vereinigen.

Beispielsweise in der Scanmikroskopie werden Proben oft mit mehreren Markem, beispielsweise mehreren unterschiedlichen Fluoreszenzfarbstoffen präpariert, um diese simultan mit einem Beleuchtungslichtstrahl, der Licht mehrerer Anregungswellenlängen beinhaltet, anzuregen. Zur Erzeugung des Beleuchtungslichtstrahles werden üblicherweise die Lichtstrahlen mehrerer Laser mit meist mehreren, hintereinander geschalteten, dichroitischen Strahlteilern vereinigt. Aus der Deutschen Offenlegungsschrift DE 198 29 953 A1 ist beispielsweise ein Scanmikroskop mit einem dichroitischen Strahlvereiniger für infrarotes und ultraviolettes Licht bekannt.

Aus der Deutschen Offenlegungsschrift DE 198 35 068 A1 ist ein Mikroskop, insbesondere Laser-Scanning-Mikroskop mit Beleuchtung über eine und/oder mehrere Wellenlängen bekannt, wobei eine Steuerung der Intensität mindestens einer Wellenlänge über mindestens einen im Beleuchtungsstrahlengang angeordneten drehbaren Interferenzfilter erfolgt, wobei die mindestens eine Wellenlänge zumindest teilweise aus dem Beleuchtungsstrahlengang herausreflektiert wird und mehrere Filter für unterschiedliche Wellenlängen hintereinander im Beleuchtungsstrahlengang angeordnet sein können.

Das U.S. Patent 4,627,725 offenbart ein optisches System, das die Ausrichtung bzw. Lage der optischen Achse überwacht. Dazu werden aus dem Beleuchtungslichtstahl, der in der optischen Achse verläuft mehrere Teilstrahlen ausgekoppelt, die auf entsprechende Lichtdetektoren gerichtet werden. Die Detektoren sind Positionsdetektore, über die Lage des Beleuchtungslichtstrahls zur optischen Achse ermittelt werden kann. Dieses Dokument offenbart jedoch nicht, dass aktive Stellelemente (Kippspiegel) vorhanden sind, mit denen mindestens ein beliebig eingestrahlter Lichtstrahl auf die optische Achse bzw. auf die in einem optischen System ausgezeichnete Strahlachse justiert werden kann.

In der Scanmikroskopie werden die Lichtstrahlen einer Lichtquelle in das Scanmikroskop eingekoppelt und auf den Strahlengang des Scanmikroskops justiert, und eine Probe mit dem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealerweise einen Mäander beschreibt. (Abtasten einer Zeile in x-Richtung bei konstanter y-Position, anschließend x-Abtastung anhalten und per y-Verstellung auf die nächste abzutastende Zeile schwenken und dann, bei konstanter y-Position, diese Zeile in negativer x-Richtung abtasten u.s.w.). Um eine schichtweise Bilddatennahme zu ermöglichen, wird der Probentisch oder das Objektiv nach dem Abtasten einer Schicht verschoben und so die nächste abzutastende Schicht in die Fokusebene des Objektivs gebracht.

Die Einkopplung der Lichtstrahlen zur Beleuchtung einer Probe in ein Mikroskop ist in Bezug auf die Justierung eine sehr kritische Stelle, insbesondere da die Lage und die Ausbreitungsrichtung meist mehrerer Lichtstrahlen unterschiedlicher Wellenlängen exakt dem Sollstrahlengang des Mikroskops folgen müssen. Die Justierung einer Direkteinkopplung ist einerseits schwierig und andererseits meist nicht sehr zuverlässig, da aufgrund relativ langer Lichtwege schon kleinste Schwankungen im Aufbau zu Störungen führen, die aufwendige Nachjustierungen erforderlich machen. Oft werden zum Transport der Lichtstrahlen von der Lichtquelle bzw. von den Lichtquellen zu dem Mikroskop Lichtleitfasern verwendet, um das Problem auf eine Justierung der Lichtleitfaserauskopplung zu reduzieren, die zwar auch aufwendig, jedoch aufgrund der kürzeren Lichtwege weniger empfindlich gegen Dejustierungen ist. Das Justierproblem wird hierdurch jedoch nicht gelöst, sondern allenfalls vermindert, wobei jedoch andere Schwierigkeiten, wie die Schwankung der Polarisationsrichtung der Lichtstrahlen entstehen.

DE 198 16 302 C1 offenbart eine Einrichtung zur Strahlentherapie von Gewebeteilchen. Die Einrichtung beinhaltet ein optisches Element, das einen Ziel und einen Therapiestrahl zu einem Strahlengang zusammen führt. Das optische Element ist eine Platte mit zwei optisch wirksamen Flächen, wobei an mindestens einer der Flächen ein Teilstrahl aus dem Therapiestrahl auskoppelbar ist. Die abgespaltenen Teilstrahlen werden als Referenzstrahlen zur Regelung der Lichtleistung genutzt.

Die bekannten Anordnungen zum Vereinigen von Lichtstrahlen unterschiedlicher Wellenlänge haben den Nachteil, dass sie in Bezug auf einen Wellenlängenwechsel unflexibel sind. Außerdem ist es nicht möglich zu ermitteln, ob die vereinigten Strahlen tatsächlich exakt kollinear verlaufen. Dies bleibt in der Regel aufwendiger Weise dem Benutzer bzw. dem Servicetechniker überlassen. Verlaufen die zu einem Beleuchtungslichtstrahl vereinigten Lichtstrahlen nicht weitgehend kollinear, so kommt es in der Scanmikroskopie zu Abbildungsfehlern, insbesondere zu unschönen Artefakten und Helligkeitsschwankungen.

Es ist die Aufgabe der Erfindung, eine optische Vorrichtung zum Justieren von mindestens einem Lichtstrahl vorzuschlagen, die flexibel insbesondere bei verschiedenen Wellenlängen einsetzbar ist und die gleichzeitig eine effektive und wirksame Überwachung der Justierung ermöglicht.

Die Aufgabe wird durch eine optische Vorrichtung gelöst, die dadurch gekennzeichnet ist, dass zwei Referenzstrahlen pro Lichtstrahl zu einem Positionsdetektor gelangen und dort detektierbar sind. Der Positionsdetektor ist mit einer Verarbeitungseinheit verbunden. Die Verarbeitungseinheit ist mit zwei Stellelementen pro zu justierenden Lichtstrahl verbunden und steuert derart Kippspiegel der Stellelemente dass der aus dem optischen Bauteil austretende, mindestens eine Lichtstrahl auf einer Sollachse (89) verläuft und wobei die Stellelemente der ersten Grenzfläche zum Abspalten des mindestens ersten Referenzstrahles vorgeschaltet sind.

Es ist eine weitere Aufgabe der Erfindung ein Verfahren zum Justieren mindestens eines Lichtstrahles auf einen Sollstrahlengang anzugeben, das effizient und zuverlässig und reproduzierbar ausführbar und das universell einsetzbar ist.

Diese Aufgabe wird durch ein Verfahren gelöst, das die Merkmale des Anspruchs 10 umfasst.

Eine Weitergestaltung der Erfindung ist ein Verfahren zum Vereinigen von einem Lichtstrahl und zumindest einem weiteren Lichtstrahl das flexibel und zuverlässig insbesondere bei verschiedenen Wellenlängen einsetzbar ist.

Die Erfindung hat insbesondere in der Scanmikroskopie den Vorteil, dass eine einfache und zuverlässige Justierung der Lichtstrahlen einer Lichtquelle bzw. mehrerer Lichtquellen auf den Sollstrahlengang ermöglicht ist. Außerdem ist eine Möglichkeit zur wirksamen Überwachung der Justierung gegeben. Folglich ist in der Scanmikroskopie durch die Vermeidung von Dejustierungen eine besondere Stabilität der Bildqualität bei gleichzeitiger flexibler Einsetzbarkeit in Bezug auf die Beleuchtungslicht-Wellenlänge gegeben.

Als Mittel zum Abspalten eines ersten Referenzstrahles ist eine erste Grenzfläche und als weiteres Mittel zum Abspalten des zweiten Referenzstrahles ist eine zweite Grenzfläche vorgesehen. In einer bevorzugten Ausgestaltung ist ein Prisma vorgesehen, wobei vorzugsweise zwei der Seitenflächen die erste und zweite Grenzfläche bilden.

In einer Variante ist ein akustooptisches Bauteil vorgesehen, das beispielsweise als ein akustooptischer Modulator (AOM), als ein akustooptischer abstimmbarer Filter (AOTF) oder als ein akustooptischer Deflektor (AOD) ausgeführt sein kann. Das akustooptische Bauteil, kann in einer bevorzugten Ausgestaltung die Vereinigung von Lichtstrahlen bewirken. In einer anderen Ausführung dient das akustooptische Bauteil zur spektralen Aufspaltung und ist beispielsweise einem Prisma mit einer ersten und einer zweiten Grenzfläche vorgeordnet. Das akustooptische Bauteil kann auch dazu dienen die Lichtleistung der vereinigten Lichtstrahlen separat zu variieren und der jeweiligen Anwendung anzupassen.

In einer bevorzugten Ausgestaltung ist der Positionsdetektor für verschiedene detektierbare Positionen kalibriert. Jeder möglichen Strahllage ist vorzugsweise eine detektierbarer Satz von Positionen zugeordnet; auch zur Sollstrahllage gibt es einen korrespondierenden Satz von Sollpositionen. Die Ausbreitungsrichtung und/oder die Lage der zu justierenden Lichtstrahlen werden optimiert, bis die Sollpositionen detektiert werden. Weichen die detektierten Positionen, beispielsweise auf Grund einer äußeren Störung von den Sollpositionen ab, kann über eine Regelschleife eine Nachjustierung erfolgen, so dass die zu justierenden Lichtstrahlen aktiv auf dem Sollstrahlengang gehalten werden können. Vorzugsweise wird der erste Referenzstrahl und der zweite Referenzstrahl an verschiedenen Orten abgespalten.

Das Mittel zum Abspalten eines ersten Referenzstrahles und das weitere Mittel zum Abspalten des zweiten Referenzstrahles sind Bestandteile eines einzigen optischen Bauteils, beispielsweise zwei Seitenflächen eines Prismas. Diese Ausgestaltung ist besonders stabil und resistent gegen Vibrationen und Erschütterungen. Die erfindungsgemäße Einrichtung bzw. Vorrichtung ist vorzugsweise in einer kompakten monolithischen Bauweise ausgeführt. Die Mittel zum Abspalten und der Positionsdetektor sind einander vorzugsweise raumfest zugeordnet ist, so dass, da nur eine Relativmessung ausgeführt werden muss, eine besondere Stabilität gegeben ist.

Die Ausbreitungsrichtung und/oder die Lage der Lichtstrahlen bzw. des Lichtstrahls sind mit Stellelementen, die beispielsweise als kardanisch aufgehängte Kippspiegel ausgeführt sein können, veränderbar. In einer besonders bevorzugten Ausführungsvariante ist vorgesehen, dass die Einfallswinkel und/oder die Orte unter denen die Lichtstrahlen auf die erste Grenzfläche treffen, einstellbar sind. Hierzu sind ebenfalls Stellelemente vorgesehen. Als Stellelemente werden steuerbare lichtstrahlablenkende Kippspiegel verwendet. Die Stellelemente sind dem Mittel zum Abspalten eines ersten Referenzstrahles vorgeschaltet.

Eine Ausführungsform, in der die Stellelemente in Abhängigkeit von den mit dem Positionsdetektor(en) detektierten Positionen steuer- und/oder regelbar sind, ist besonders vorteilhaft. Mit einer solchen Ausgestaltung ist eine Steuerung bzw. Regelung realisierbar, die automatisch die Justierung des Lichtstrahles (der Lichtstrahlen) bzw. die Kollinearität der vereinigten Lichtstrahlen optimiert.

In einer bevorzugten Ausgestaltung ist der Positionsdetektor als CCD-Detektor ausgeführt. Er kann beispielsweise auch als Photodiodenzeile, als Photomultiplierarray ausgeführt sein oder auch mehrere Einzeldetektoren beinhalten. Vorzugsweise werden die Referenzstrahlen gemeinsam mit einem Positionsdetektor detektiert, so dass nur noch Relativmessungen innerhalb des Positionsdetektors nötig sind.

Vorzugsweise werden die Position des ersten Referenzstrahles und die Position des zweiten Referenzstrahles unabhängig voneinander detektiert und für Korrekturen der Strahlwinkel und -lagen nutzbar gemacht. In einer bevorzugten Ausgestaltung werden die Positionen der Referenzstrahlen gleichzeitig detektiert, was in Bezug auf äußere Störungen, wie Vibrationen und Erschütterungen, besonders vorteilhaft ist, weil keine Änderung der räumlichen Situation die Messung verfälscht.

In einer besonderen Ausführung sind die Lichtleistungen der Referenzstrahlen unabhängig voneinander ermittelbar und für Korrekturen der Lichtleistungen verwendbar, was insbesondere in der Scanmikroskopie von Wichtigkeit ist.

In einer bevorzugten Ausgestaltung der Einrichtung zum Justieren ist mindestens ein weiterer Lichtstrahl auf den Sollstrahlengang justierbar. Der Lichtstrahl und weitere Lichtstrahlen können verschiedene Wellenlängen aufweisen.

Vor dem Mittel zum Abspalten eines ersten Referenzstrahles ist in einer bevorzugten Ausgestaltung ein Bauteil zur spektralen Aufspaltung vorgesehen, das vorzugsweise zwischen den Stellelementen und dem Mittel zum Abspalten eines ersten Referenzstrahles angeordnet ist. Das Bauteil zur spektralen Aufspaltung kann beispielsweise als planparallele Platte, als Prisma oder als Gitter ausgeführt sein.

In einer anderen Ausführung ist ein dispersives Element vorgesehen, das zwischen dem Mittel zum Abspalten eines ersten Referenzstrahles und dem weiteren Mittel zum Abspalten des zweiten Referenzstrahles angeordnet ist.

In einer bevorzugten Ausgestaltung der Einrichtung zum Justieren spaltet das Mittel zum Abspalten von dem weiteren Lichtstrahl einen weiteren ersten Referenzstrahl ab und das weitere Mittel zum Abspalten von dem weiteren Lichtstrahl einen weiteren zweiten Referenzstrahl, wobei der weitere erste und der weitere zweite Referenzstrahl von dem Positionsdetektor detektierbar sind, und wobei die Ausbreitungsrichtung und/oder die Lage des zweiten Lichtstrahles in Abhängigkeit von den detektierten Positionen des weiteren ersten und des weiteren zweiten Referenzstrahls auf den Sollstrahlengang einstellbar ist. Vorzugsweise sind die Ausbreitungsrichtung und/oder die Lage des ersten und des weiteren Lichtstrahles unabhängig voneinander einstellbar. In einer Variante sind weitere Stellelemente zum Einstellen der Ausbreitungsrichtung und/oder der Lage des weiteren Lichtstrahles vorgesehen. Vorzugsweise sind die weiteren Stellelemente in Abhängigkeit von den detektierten Positionen des weiteren ersten und des weiteren zweiten Referenzstrahles steuerbar.

Die Einrichtung zum Justieren eignet sich besonders gut zur Einkopplung von Lichtstrahlen in ein Mikroskop, insbesondere ein Scanmikroskop, das als konfokales Scanmikroskop ausgeführt sein kann. Demgemäss kann der Sollstrahlengang der Strahlengang eines Mikroskops, eines Scanmikroskops oder ein konfokales Scanmikroskops sein. In einer anderen vorteilhaften Ausgestaltung dient die Einrichtung gleichzeitig zum Auskoppeln des von der Probe ausgehenden Detektionslichtes.

In einer bevorzugten Ausgestaltung verlaufen die von der Lichtquelle emittierten Lichtstrahlen zunächst kollinear und werden vor der ersten Grenzfläche mit einem Bauteil zur spektralen Aufspaltung räumlich spektral getrennt. Diese Ausführung ist insbesondere dann interessant, wenn die Lichtquelle eine Lichtleitfaser umfasst, die alle primären Lichtstrahlen gemeinsam transportiert.

In der Zeichnung ist der Erfindungsgegenstand schematisch dargestellt und wird anhand der Figuren nachfolgend beschrieben, wobei gleich wirkende Bauteile mit denselben Bezugszeichen versehen sind. Dabei zeigen:
- Fig. 1: eine optische Vorrichtung zum Vereinigen von zumindest zwei Lichtstrahlen,
- Fig. 2: eine Einrichtung zum Justieren,
- Fig. 3: ein erfindungsgemäßes Scanmikroskop.
- Fig. 4: eine weitere Einrichtung zum Justieren.

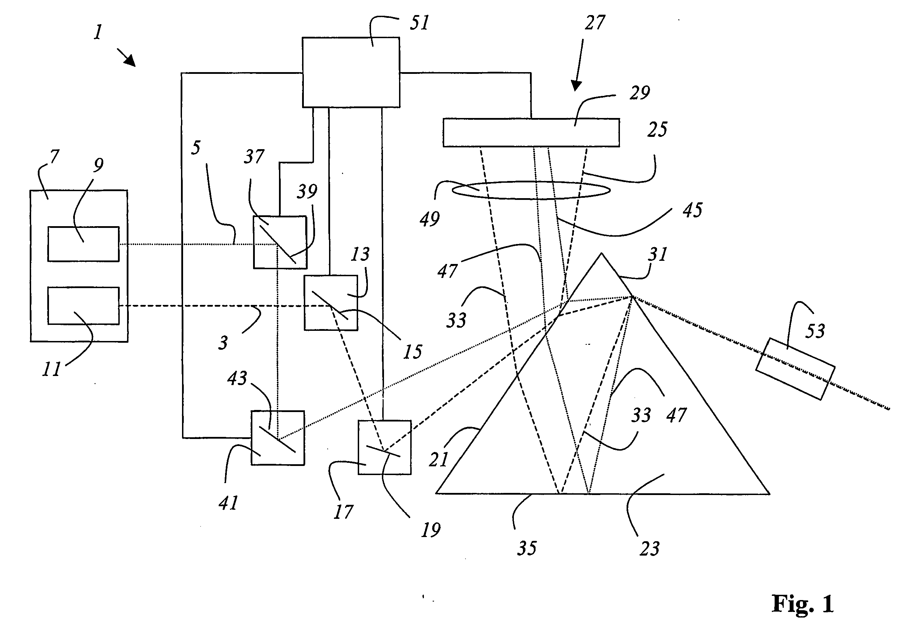

Fig. 1 zeigt schematisch eine optische Vorrichtung 1 zum Vereinigen von zumindest zwei Lichtstrahlen, nämlich einem ersten Lichtstrahl 3 und einem zweiten Lichtstrahl 5. Die Lichtstrahlen 3, 5 werden von einer Lichtquelle 7, die einen ersten Laser 9 und einen zweiten Laser 11 beinhaltet emittiert. Die Lichtstrahlen 3, 5 weisen unterschiedliche Wellenlängen auf. Der erste Lichtstrahl 3 trifft auf ein erstes Stellelement 13, das einen in zwei Achsen verkippbaren ersten Kippspiegel 15 beinhaltet. Anschließend trifft der erste Lichtstrahl 3 auf ein zweites Stellelement 17, das einen in zwei Achsen verkippbaren zweiten Kippspiegel 19 beinhaltet. Das zweite Stellelement 17 lenkt den ersten Lichtstrahl 3 auf ein Mittel zum Abspalten eines ersten Referenzstrahles 25, das als erste Grenzfläche 21 eines Prismas 23 ausgeführt ist. An der ersten Grenzfläche 21 wird ein erster Referenzstrahl 25 durch Teilreflexion abgespalten und trifft auf den Positionsdetektor 27, der als CCD-Array 29 ausgeführt ist. Nach Passieren der ersten Grenzfläche 21 durchläuft der erste Lichtstrahl 3 das Prisma 23 und trifft auf ein weiteres Mittel zum Abspalten eines zweiten Referenzstrahles 33, das als zweite Grenzfläche 31 ausgeführt ist. An der zweiten Grenzfläche 31 wird ein zweiter Referenzstrahl 33 durch Teilreflexion abgespalten und trifft nach einer totalinternen Reflexion an einer dritten Grenzfläche 35 und nach Passieren der ersten Grenzfläche 21 auf den Positionsdetektor 27. Analog verläuft der zweite Lichtstrahl 5, von einem dritten Stellelement 37 mit einem dritten Kippspiegel 39 und einem vierten Stellelement 41 mit einem vierten Kippspiegel 43 geführt. Von dem zweiten Lichtstrahl 5 wird an der ersten Grenzfläche 21 ein weiterer erster Referenzstrahl 45 an der zweiten Grenzfläche 31 ein weiterer zweiter Referenzstrahl 47 abgespalten und zu dem Positionsdetektor 27 gelenkt. Vor dem Positionsdetektor ist eine Linse 49 angeordnet, die die Referenzstrahlen auf das CCD-Array 29 fokussiert. Es ist auch möglich, eine leichte Defokussierung vorzusehen, um durch Interpolation über mehrere Pixel eine bessere Auflösung zu erreichen. Aus den verschiedenen Auftrefforten der Referenzstrahlen auf dem CCD-Array 29 kann auf die Orte und auf die Winkel, unter denen die Lichtstrahlen 3, 5 auf die erste Grenzfläche 21 bzw. zweite Grenzfläche 31 treffen, geschlossen werden und somit auf die Lage und die Ausbreitungsrichtung der Lichtstrahlen 3, 5 nach dem Verlassen des Prismas 23. Der Positionsdetektor erzeugt Positionssignale, die er an eine Verarbeitungseinheit 51 weitergibt. Anhand der übergebenen Positionsdaten steuert die Verarbeitungseinheit 51 die Stellelemente 13, 17, 37, 41, bis die aus dem Prisma austretenden Lichtstrahlen 3, 5 hinreichend kollinear verlaufen. Der Wegunterschied zwischen dem ersten Referenzstrahl 25 und dem zweiten Referenzstrahl 33 bzw. zwischen dem weiteren ersten Referenzstrahl 45 und dem weiteren zweiten Referenzstrahl 47 beträgt vorzugsweise etwa 20 mm, was zu einer Abstandsänderung von ca. 20 µm auf dem Positionsdetektor pro mrad Winkeldifferenz führt. 20 µm entspricht etwa dem Abstand zweier Pixel auf üblichen CCD Detektoren.

Im weiteren Strahlengang der vereinigten Lichtstrahlen 3, 5 ist ein akustooptisches Bauteil, das als AOTF 53 ausgeführt ist, vorgesehen, um die Lichtleistung der Lichtstrahlen 3, 5 separat einstellen zu können. Der erste Lichtstrahl 3 und die von ihm abgespaltenen Referenzstrahlen 25, 33 sind in der Zeichnung gestrichelt dargestellt. Der zweite Lichtstrahl 5 und die von ihm abgespaltenen Referenzstrahlen 45, 47 sind in der Zeichnung gepunktet dargestellt.

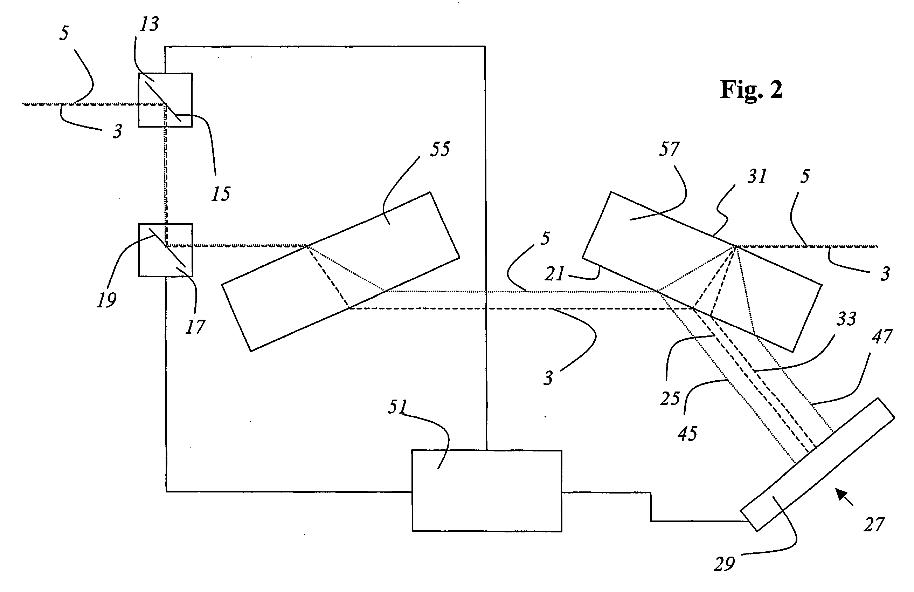

Fig. 2 zeigt eine erfindungsgemäße Vorrichtung, die insbesondere dazu geeignet ist, mehrere koaxial verlaufenden Lichtstrahlen 3, 5, die unterschiedliche Wellenlängen aufweisen, beispielsweise nach der Auskopplung aus einer Lichtleitfaser, auf einen gemeinsamen Sollstrahlengang zu justieren und dort durch eine geeignete Regelung zu halten.

Die Lichtstrahlen 3, 5 treffen auf ein erstes Stellelement 13, das einen in zwei Achsen verkippbaren ersten Kippspiegel 15 beinhaltet und anschließend auf ein zweites Stellelement 17, das einen in zwei Achsen verkippbaren zweiten Kippspiegel 19 beinhaltet. Mit Hilfe der Stellelemente 13, 17 lässt sich die Lage und die Ausbreitungsrichtung der Lichtstrahlen 3, 5 einstellen. Nach Passieren der Stellelemente 13, 17 treffen die Lichtstrahlen 3, 5 auf eine erste planparallele Platte 55, die die Lichtstrahlen 3, 5 räumlich spektral trennt. Mit Hilfe einer zweiten planparallelen Platte 57 werden die Lichtstrahlen 3, 5 wieder vereinigt. Die zweite planparallele Platte 57 weist als Mittel zum Abspalten eines ersten Referenzstrahles 25 und eines weiteren ersten Referenzstrahles 45 eine erste Grenzfläche 21 auf, die von dem ersten Lichtstrahl 3 einen ersten Referenzstrahl 25 und von dem zweiten Lichtstrahl 5 einen weiteren ersten Referenzstrahl 45 abspaltet. Nach Durchlaufen der zweiten planparallelen Platte 57 treffen die Lichtstrahlen 3, 5 auf ein Mittel zum Abspalten eines zweiten Referenzstrahles 33 und eines weiteren zweiten Referenzstrahles 47, nämlich eine zweite Grenzfläche 31, die von dem ersten Lichtstrahl 3 einen zweiten Referenzstrahl 33 und von dem zweiten Lichtstrahl 5 einen weiteren zweiten Referenzstrahl 47 abspaltet. Alle Referenzstrahlen werden zu einem Positionsdetektor 27 geführt, der als CCD-Array 29 ausgeführt ist.

Der Positionsdetektor 27 erzeugt Positionssignale, die er an eine Verarbeitungsarbeit 51 weitergibt. Anhand der übergebenen Positionsdaten steuert die Verarbeitungsarbeit 51 die Stellelemente 13, 17, bis die aus der zweiten planparallelen Platte austretenden Lichtstrahlen 3, 5 die gewünschte Lage haben und in die gewünschte Richtung verlaufen. Die aktuelle Lage und die aktuelle Ausbreitungsrichtung der Lichtstrahlen 3, 5 wird permanent oder regelmäßig mit der gewünschten Lage und der gewünschten Ausbreitungsrichtung verglichen und ggf. automatisch von der Verarbeitungseinheit 51 über sie Stellelemente 13, 17 korrigiert.

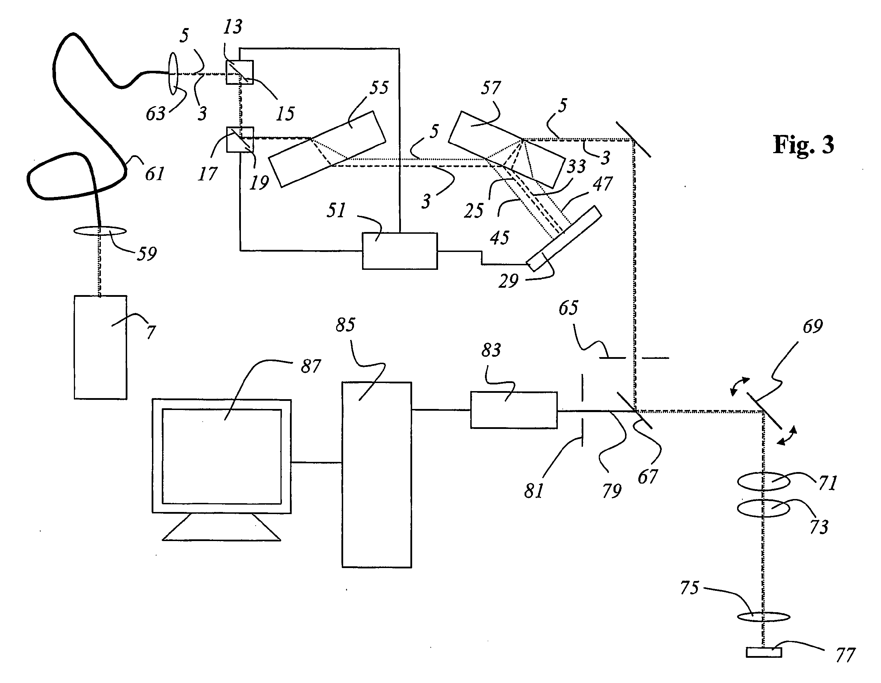

Fig. 3 zeigt schematisch ein Scanmikroskop, das als konfokales Scanmikroskop ausgeführt ist. Die von einer Lichtquelle 7, die als Mehrlinienlaser ausgeführt ist, kommenden Lichtstrahlen 3, 5 werden mit der Optik 59 zum Transport in eine Lichtleitfaser 61 eingekoppelt. Die Auskopplung erfolgt mit einer weiteren Optik 63, die die Lichtstrahlen 3, 5 weitgehend kollimiert. Mit der folgenden Vorrichtung, deren Funktionsweise bereits in Bezug auf Fig. 2 beschrieben wurde, werden die Lichtstrahlen 3, 5 automatisch auf den Strahlengang des Scanmikroskops justiert.

Nach Passieren der Beleuchtungslochblende 65 werden die Lichtstrahlen 3, 5 von einen Strahlteiler 67 zu einem kardanisch aufgehängten Scanspiegel 69, der die Lichtstrahlen 3, 5 durch die Scanoptik 71, die Tubusoptik 73 und das Objektiv 75 hindurch über bzw. durch die Probe 77 führt. Die Probe 77 ist mit mehreren Fluoreszenzfarbstoffen markiert. Der von der Probe 77 ausgehende Detektionslichtstrahl 79 gelangt durch das Objektiv 75, die Tubusoptik 73 und die Scanoptik 71 hindurch und über den Scanspiegel 69 zum Strahlteiler 67, passiert diesen und trifft nach Passieren der Detektionsblende 81 auf einen Detektor 83, der als Multibanddetektor ausgeführt ist, und der elektrische, zur Leistung des Detektionslichtstrahls 79 proportionale elektrische Detektionssignale erzeugt. Diese werden an den PC 85 weitergeleitet. Die Detektionssignale werden im PC 85 aufbereitet und dem Benutzer auf einem Monitor 87 in Form eines Abbildes der Probe 77 angezeigt. Das Scanmikroskop ist unempfindlich gegen Dejustierungen und erlaubt einen schnellen, unkomplizierten Wechsel der Lichtquelle bzw. der Lichtleitfaser.

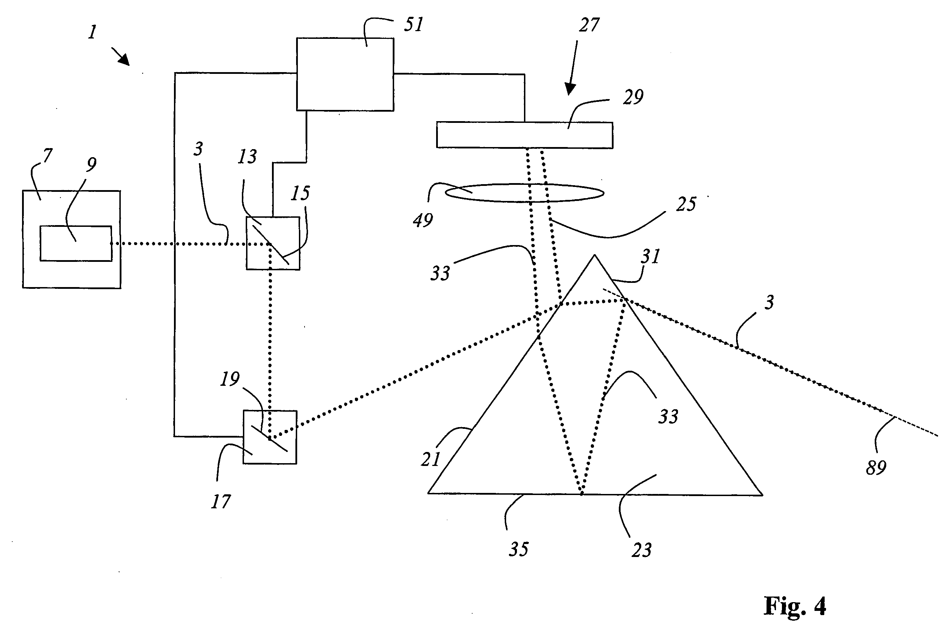

Fig. 4 zeigt eine Einrichtung zum Justieren eines Lichtstrahles 3 auf einen Sollstrahlengang, der in der Zeichnung durch eine optische Sollachse 89 illustriert ist. Der Lichtstrahl 3 trifft auf ein erstes Stellelement 13, das einen in zwei Achsen verkippbaren ersten Kippspiegel 15 beinhaltet. Anschließend trifft der erste Lichtstrahl 3 auf ein zweites Stellelement 17, das einen in zwei Achsen verkippbaren zweiten Kippspiegel 19 beinhaltet. Das zweite Stellelement 17 lenkt den ersten Lichtstrahl 3 auf ein Mittel zum Abspalten eines ersten Referenzstrahles 25, das als erste Grenzfläche 21 eines Prismas 23 ausgeführt ist. An der ersten Grenzfläche 21 wird ein erster Referenzstrahl 25 durch Teilreflexion abgespalten und trifft auf den Positionsdetektor 27, der als CCD-Array 29 ausgeführt ist. Nach Passieren der ersten Grenzfläche 21 durchläuft der erste Lichtstrahl 3 das Prisma 23 und trifft auf ein weiteres Mittel zum Abspalten eines zweiten Referenzstrahles 33, das als zweite Grenzfläche 31 ausgeführt ist. An der zweiten Grenzfläche 31 wird ein zweiter Referenzstrahl 33 durch Teilreflexion abgespalten und trifft nach einer totalinternen Reflexion an einer dritten Grenzfläche 35 und nach Passieren der ersten Grenzfläche 21 auf den Positionsdetektor 27. Vor dem Positionsdetektor ist eine Linse 49 angeordnet, die die Referenzstrahlen auf das CCD-Array 29 fokussiert. Es ist auch möglich, eine leichte Defokussierung vorzusehen, um durch Interpolation über mehrere Pixel eine bessere Auflösung zu erreichen. Aus den verschiedenen Auftrefforten der Referenzstrahlen auf dem CCD-Array 29 kann auf die Orte und auf die Winkel, unter denen der Lichtstrahl 3 auf die erste Grenzfläche 21 bzw. zweite Grenzfläche 31 treffen, geschlossen werden und somit auf die Lage und auf die Ausbreitungsrichtung des Lichtstrahls 3 nach dem Verlassen des Prismas 23. Der Positionsdetektor erzeugt Positionssignale, die er an eine Verarbeitungseinheit 51 weitergibt. Anhand der übergebenen Positionsdaten steuert die Verarbeitungseinheit 51 die Stellelemente 13, 17, bis der aus dem Prisma austretende Lichtstrahl 5 auf dem Sollstrahlengang bzw. der Sollachse 89 verläuft.

Mit derselben Einrichtung können weitere Lichtstrahlen gleichzeitig auf den Sollstrahlengang justiert werden. Hierfür sind vorzugsweise weitere Stellelemente vorgesehen.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Optische Vorrichtung (1) zum Justieren von mindestens einem Lichtstrahl (3, 5), mit
- einem optischen Bauteil (23, 57), das eine erste Grenzfläche (21) zum Abspalten mindestens eines ersten Referenzstrahles (25) von dem mindestens einen Lichtstrahl (3, 5), sowie eine weitere Grenzfläche (31) zum Abspalten mindestens eines zweiten Referenzstrahles (33) von dem mindestens einen Lichtstrahl (3, 5) umfasst,
- einem Positionsdetektor (29),
- einer Verarbeitungseinheit (51) und
- pro zu justierendem Lichtstrahl zwei Stellelementen (13, 17, 37, 41) mit je mindestens einem Kippspiegel (15, 19, 39, 43),
wobei
die Referenzstrahlen (25, 33) zu dem Positionsdetektor (29) gelangen und dort detektierbar sind, und der Positionsdetektor (29) mit der Verarbeitungseinheit (51) verbunden ist, und wobei
die Verarbeitungseinheit (51) mit den zwei Stellelementen (13, 17, 37, 41) pro zu justierenden Lichtstrahl (3, 5) verbunden ist und derart die Kippspiegel (15, 19, 39, 43) der Stellelemente (13, 17, 37, 41) steuert, dass der aus dem optischen Bauteil (23, 57) austretende, mindestens eine Lichtstrahl (3, 5) auf einer Sollachse (89) verläuft und wobei
die Stellelemente (13, 17, 37, 41) der ersten Grenzfläche (21) zum Abspalten des mindestens ersten Referenzstrahles (25) vorgeschaltet sind.

2. Vorrichtung nach Anspruch 1, **dadurch gekennzeichnet, dass** mindestens zwei Lichtstrahlen (3, 5) vorgesehen sind, wobei die mindestens zwei Lichtstrahlen (3, 5) unterschiedliche Wellenlängen aufweisen.

3. Vorrichtung nach einem der Ansprüche 1 bis 2, **dadurch gekennzeichnet, dass** das optische Bauteil (29) ein Prisma ist.

4. Vorrichtung nach einem der Ansprüche 1 bis 2, **dadurch gekennzeichnet, dass** die optische Vorrichtung ein akustooptisches Bauteil ist beinhaltet.

5. Vorrichtung nach einem der Ansprüche 1 bis 4, **dadurch gekennzeichnet, dass** die Ausbreitungsrichtung und/oder die Lage des mindestens einen Lichtstrahls (3, 5) durch die Stellelemente (13, 17, 37, 41) einstellbar sind.

6. Vorrichtung nach einem der Ansprüche 1 bis 5, **dadurch gekennzeichnet, dass** die Kippspiegel (15, 19, 39, 43) der Stellelemente (13, 17, 37, 41) in Abhängigkeit der durch den Positionsdetektor (29) detektierten Positionen steuerbar sind.

7. Vorrichtung nach einem der Ansprüche 1 bis 6, **dadurch gekennzeichnet, dass** der Einfallswinkel, unter dem der mindestens eine Lichtstrahl (3, 5) auf die erste Grenzfläche (21) trifft durch die Kippspiegel (15, 19, 39, 43), einstellbar ist.

8. Vorrichtung nach einem der Ansprüche 1 bis 7, **dadurch gekennzeichnet, dass** der Ort, an dem der mindestens eine Lichtstrahl (3, 5) auf die erste Grenzfläche (21) trifft durch die Kippspiegel (15, 19, 39, 43), einstellbar ist.

9. Vorrichtung nach einem der Ansprüche 1 bis 8, **dadurch gekennzeichnet, dass** die optische Vorrichtung (1) Bestandteil eines Scanmikroskops ist, in das der justierte Lichtstrahl (3, 5) als Beleuchtungslichtstrahl einleitbar ist.

10. Verfahren zum Justieren mindestens eines Lichtstrahles auf einen Sollstrahlengang (89), **gekennzeichnet durch** folgende Schritte:
• Abspalten eines ersten Referenzstrahles (25) und eines zweiten Referenzstrahles (33) von je einem Lichtstrahl (3, 5), mit einem optischen Bauteil (23, 57), das eine erste Grenzfläche (21) und eine weitere Grenzfläche (31) zum Abspalten des ersten Referenzstrahles (25) und des zweiten Referenzstrahles (33) aufweist,
• Detektieren des ersten Referenzstrahles (25) und des zweiten Referenzstrahles (33) mit einem Positionsdetektor (29), der in einer bekannten Position zum Sollstrahlengang (89) angeordnet ist, und
• Einstellen der Ausbreitungsrichtung und/oder der Lage des mindestens einen Lichtstrahles (3, 5) in Abhängigkeit von den detektierten Positionen auf den Sollstrahlengang (89), wobei der Positionsdetektor (29) mit einer Verarbeitungseinheit (51) verbunden ist, und dass die Verarbeitungseinheit (51) mit zwei Stellelementen (13, 17, 37, 41) pro zu justierenden Lichtstrahl (3, 5) verbunden ist und **dadurch** Kippspiegel (15, 19, 39, 43) der Stellelemente (13, 17, 37, 41) derart gesteuert werden, dass der aus dem optischen Bauteil (23, 57) austretende, mindestens eine Lichtstrahl (3, 5) auf der Sollachse (89) verläuft.

11. Verfahren nach Anspruch 10, **dadurch gekennzeichnet, dass** der Positionsdetektor (29) für verschiedene detektierbare Positionen kalibriert wird.

12. Verfahren nach Anspruch 10, **dadurch gekennzeichnet, dass** die Position des ersten Referenzstrahles (25) und die Position des zweiten Referenzstrahles (33) unabhängig voneinander detektiert werden.

13. Verfahren nach Anspruch 10, **dadurch gekennzeichnet, dass** die Lichtleistungen der Referenzstrahlen (25, 33) unabhängig voneinander ermittelt werden.

14. Verfahren nach einem der Ansprüche 10 bis 13, **dadurch gekennzeichnet, dass** mindestens zwei Lichtstrahlen (3, 5) auf den Sollstrahlengang (89) justiert werden.

## Claims

1. Optical device (1) for adjusting at least one light beam (3, 5), having an optical component (23, 57), which comprises a first boundary surface (21) for splitting off at least a first reference beam (25) for the one ore more light beams (3, 5), and a further boundary surface (31) for splitting off at least a second reference beam (33) from the one or more light beams (3, 5),
• a position detector (29),
• a processing unit (51) and
• two control elements (13, 17, 37, 41) for each light beam to be adjusted, each having at least one tilting mirrors (15, 19, 39, 43)
wherein
the reference beams (25, 33) pass to the position detector (29), where they are detectable and the position detector (29) is connected to the processing unit (51) and wherein
the processing unit (51) is connected to the two control elements (13, 17, 37, 41) for each light beam (3, 5) to be adjusted and controls the tilting mirrors (15, 19, 39, 43) of the control elements (13, 17, 37, 41) in such a way that the one or more light beams (3, 5) emerging from the optical component (23, 57) run on a set axis (89) and wherein
the control elements (13, 17, 37, 41) are connected on the input side of the first boundary surface (21) for splitting off at least the first reference beam (25).

2. Device according to Claim 1, **characterised in that** there are least two light beams (3, 5), the two or more light beams (3, 5) having different wavelengths.

3. Device according to either of Claims 1 or 2, **characterised in that** the optical component (29) is a prism.

4. Device according to either of Claims 1 or 2, **characterised in that** the optical device comprises an acousto-optical component.

5. Device according to any one of Claims 1 to 4, **characterised in that** the propagation direction and/or the position of the one or more light beams (3, 5) can be adjusted by the control elements (13, 17, 37, 41).

6. Device according to any one of Claims 1 to 5, **characterised in that** the tilting mirrors (15, 19, 39, 43) of the control elements (13, 17, 37, 41) can be controlled as a function of the positions detected by the position detector (29).

7. Device according to any one of Claims 1 to 6, **characterised in that** the angle of incidence at which the one or more light beams (3, 5) strike the first boundary surface (21) can be adjusted by the tilting mirrors (15, 19, 39, 43).

8. Device according to any one of Claims 1 to 7, **characterised in that** the point at which the one or more light beams (3, 5) strike the first boundary surface (21) can be adjusted by the tilting mirrors (15, 19, 39, 43).

9. Device according to any one of Claims 1 to 8, **characterised in that** the optical device (1) is an integral part of a scanning microscope, into which the adjusted light beam (3, 5) can be introduced as illuminating light beam.

10. Method for adjusting at least one light beam to a set beam path (89), **characterized by** the following steps:
• splitting off of a first reference beam (25) and a second reference beam (33) from each light beam (3, 5), by means of an optical component (23, 57), which has a first boundary surface (21) and a further boundary surface (31) for splitting off the first reference beam (25) and the second reference beam (33).
• detection of the first reference beam (25) and the second reference beam (33) by means of a position detector (29), which is arranged in a known position relative to the set beam path (89), and
• adjustment of the propagation direction and/or the position of the one or more light beams (3, 5) as a function of the detected positions on the set beam path (89), the position detector (29) being connected to a processing unit (51), and the processing unit (51) being connected to two control elements (13, 17, 37, 41) for each light beam (3, 5) to be adjusted and controlling tilting mirrors (15, 19, 39, 43) of the control elements (13, 17, 37, 41) in such a way that the one or more light beams (3, 5) emerging from the optical component (23, 57) run on the set axis (89).

11. Method according to Claim 10, **characterised in that** the position detector (29) is calibrated for various detectable positions.

12. Method according to Claim 10, **characterised in that** the position of the first reference beam (25) and the position of the second reference beam (33) are detected independently of one another.

13. Method according to Claim 10, **characterised in that** the optical powers of the reference beams (25, 33) are determined independently of one another.

14. Method according to any one of Claims 10 to 13, **characterised in that** two or more light beams (3, 5) are adjusted onto the set beam path (89).

## Revendications

1. Dispositif optique (1) pour l'ajustage d'au moins un rayon lumineux (3, 5), avec
• un composant optique (23, 57) qui comprend une première surface limite (21) pour la séparation d'au moins un premier rayon de référence (25) du ou des rayons lumineux (3, 5), ainsi qu'une autre surface limite (31) pour la séparation d'au moins un deuxième rayon de référence (25) du ou des rayons lumineux (3, 5),
• un détecteur de position (29),
• une unité de traitement (51) et
• pour chaque rayon lumineux à ajuster, deux éléments d'ajustage (13, 17, 37, 41) comportant chacun au moins un réflecteur pivotant (15, 19, 39, 43),
étant donné que
les rayons de référence (25, 33) arrivent au détecteur de position (29) et y sont détectables, et le détecteur de position (29) est relié à l'unité de traitement (51), et étant donné que
l'unité de traitement (51) est relié aux deux éléments d'ajustage (13, 17, 37, 41) pour chaque rayon lumineux (3, 5) à ajuster et commande les réflecteurs pivotants (15, 19, 39, 43) des éléments d'ajustage (13, 17, 37, 41) de manière à ce que le ou les rayons lumineux (3, 5) qui sort (sortent) du composant optique (23, 57) court (courent) sur un axe de consigne (89), et étant donné que
les éléments d'ajustage (13, 17, 37, 41) de la première surface limite (21) sont installés en amont au moins du premier rayon de référence (25) pour la séparation.

2. Dispositif selon la revendication 1, **caractérisé en ce que** sont prévus au moins deux rayons lumineux (3, 5), étant donné que les au moins deux rayons lumineux (3, 5) présentent des longueurs d'ondes différentes.

3. Dispositif selon l'une quelconque des revendications 1 à 2, **caractérisé en ce que** le composant optique (29) est un prisme.

4. Dispositif selon l'une quelconque des revendications 1 à 2, **caractérisé en ce que** le dispositif optique est un composant acousto-optique.

5. Dispositif selon l'une quelconque des revendications 1 à 4, **caractérisé en ce que** le sens de propagation et/ou la position du ou des rayons lumineux (3, 5) peuvent être réglés par les éléments d'ajustage (13, 17, 37, 41).

6. Dispositif selon l'une quelconque des revendications 1 à 5, **caractérisé en ce que** les réflecteurs pivotants (15, 19, 39, 43) des éléments d'ajustage (13, 17, 37, 41) peuvent être commandés en fonction des positions détectées par le détecteur de position (29).

7. Dispositif selon l'une quelconque des revendications 1 à 6, **caractérisé en ce que** l'angle d'incidence au-dessous duquel le ou les rayons lumineux (3, 5) touche (touchent) la première surface limite (21) peut être réglé par les réflecteurs pivotants (15, 19, 39, 43).

8. Dispositif selon l'une quelconque des revendications 1 à 7, **caractérisé en ce que** l'endroit auquel le ou les rayons lumineux (3, 5) touche (touchent) la première surface limite (21) peut être réglé par les réflecteurs pivotants (15, 19, 39, 43).

9. Dispositif selon l'une quelconque des revendications 1 à 8, **caractérisé en ce que** le dispositif optique (1) est partie intégrante d'un microscope à balayage dans lequel le rayon lumineux (3, 5) ajusté peut être introduit comme rayon d'éclairage.

10. Procédé pour l'ajustage d'au moins un rayon lumineux sur un trajet de faisceau prédéfini (89), **caractérisé par** les étapes suivantes :
• séparation d'un premier rayon de référence (25) et d'un deuxième rayon de référence (33) d'un rayon lumineux (3, 5) chacun, avec un composant optique (23, 57) qui présente une première surface limite (21) et une autre surface limite (31) pour la séparation du premier rayon de référence (25) et du deuxième rayon de référence (33),
• détection du premier rayon de référence (25) et du deuxième rayon de référence (33) avec un détecteur de position (29) qui est disposé à une position connue par rapport au trajet de faisceau (89) prédéfini, et
• réglage du sens de propagation et/ou de la position du ou des rayons lumineux (3, 5) en fonction des positions détectées sur le trajet de faisceau (89) prédéfini, étant donné que le détecteur de position (29) est relié à une unité de traitement (51) avec deux éléments d'ajustage (13, 17, 37, 41) pour chaque rayon lumineux (3, 5) à ajuster et commande les réflecteurs pivotants (15, 19, 39, 43) des éléments d'ajustage (13, 17, 37, 41) de manière à ce que le ou les rayons lumineux (3, 5) qui sort (sortent) du composant optique (23, 57) court (courent) sur l'axe de consigne (89).

11. Procédé selon la revendication 10, **caractérisé en ce que** le détecteur de position (29) est calibré pour différentes positions détectables.

12. Procédé selon la revendication 10, **caractérisé en ce que** la position du premier rayon de référence (25) et la position du deuxième rayon de référence (33) sont détectées indépendamment l'une de l'autre.

13. Procédé selon la revendication 10, **caractérisé en ce que** les rendements lumineux des rayons de référence (25, 33) sont déterminés indépendamment l'un de l'autre.

14. Procédé selon l'une quelconque des revendications 10 à 13, **caractérisé en ce que** au moins deux rayons lumineux (3, 5) sont ajustés sur le trajet de faisceau (89) prédéfini.
